# FASCICULE DE BREVET EUROPEEN

(11) **EP 0 631 526 B1**
(45) Date de publication et mention de la délivrance du brevet: **08.10.1997**
(21) Numéro de dépôt: 93920557.1
(22) Date de dépôt: 16.03.1993
(51) Int. Cl.: B05C 21/00, B25B 27/00

(54) **DISTRIBUTEUR A MAIN POUR LA POSE D'UN CORDON DE MATIERE SOUPLE SOUS UN JOINT, PROCEDE DE POSE ET APPLICATION D'UN TEL CORDON**
HANDBETAETIGTE VORRICHTUNG SOWIE VERFAHREN ZUM EINBRINGEN EINES ELASTOMER-STRANGES UNTER EINER DICHTUNG
HAND-HELD DISPENSER FOR LAYING A STRIP OF FLEXIBLE MATERIAL UNDER A SEAL, LAYING METHOD THEREFOR AND USES OF SAID STRIP

(30) Priorité: 17.03.1992 FR 9203337
(43) Date de publication de la demande: 04.01.1995
(73) Titulaire: BODIN, Pierre, F-67400 Illkirch Graffenstaden (FR)
(72) Inventeur: BODIN, Pierre, F-67400 Illkirch Graffenstaden (FR)
(74) Mandataire: Metz, Paul
(86) Numéro de dépôt international: FR9300259
(87) Numéro de publication internationale: WO9318862

(56) Documents cités:
- EP-A- 0 242 114
- SE-B- 440 982

## Description

L'invention se rapporte à un procédé et à un distributeur à main pour la pose d'un cordon de matière souple destiné à maintenir à l'état soulevé des joints linéaires ou périmétriques notamment à lèvre(s), par exemple les joints d'étanchéité de vitres de véhicules, avant peinture ou traitement.

Lors du passage d'un véhicule en atelier de peinture, par exemple pour repeindre la carrosserie d'un véhicule ou une partie de celle-ci après des réparations de tôlerie consécutives à un accident, ou dans le but de rafraîchir ou de décorer le véhicule, la réalisation du travail s'avère notamment délicate au niveau des bordures entre la carrosserie à peindre et les parties voisines non peintes.

Ainsi, les surfaces vitrées doivent être protégées. On les recouvre habituellement d'un écran en papier, maintenu par un ruban adhésif apposé sur le joint le long du pourtour de chaque vitre et du pare-brise.

Le joint, généralement en caoutchouc ou en matière plastique semi-rigide, apporte l'étanchéité et masque simultanément par recouvrement la bordure périmétrique de jonction entre les bords du pare-brise et la carrosserie. A cet effet, il recouvre la carrosserie sur quelques millimètres.

Afin d'éviter une interruption brutale et disgracieuse du film de peinture au niveau du bord de la lèvre de ce joint, favorisant les débuts d'écaillement de la nouvelle couche de peinture, il est nécessaire de soulever la lèvre du joint et de la maintenir soulevée pendant la projection et le séchage de la peinture.

On peut assurer ainsi la continuité de la couche de peinture sous la lèvre recouvrante du joint.

De cette façon, lors de la projection de la peinture, la pulvérisation atteint également de manière continue la zone normalement recouverte par le joint.

Dans l'état final, le joint recouvre donc la bordure de la couche de peinture, donnant un aspect de continuité esthétique et protégeant cette bordure contre les agressions atmosphériques.

Pour soulever la lèvre du joint et la maintenir à l'état soulevé sur tout le pourtour d'un pare-brise ou d'une vitre, les carrossiers disposent actuellement de moyens de fortune et de quelques outils jugés malcom modes.

Il s'agit par exemple d'un intercalaire linéaire sous la forme d'un conduit tubulaire souple que l'on interpose entre la lèvre du joint et la carrosserie en le glissant manuellement le long de celui-ci.

Ce conduit tubulaire peut aussi être mis en place à l'aide d'un guide que l'on introduit sous le joint pour le soulever, puis que l'on fait glisser le long de ce joint tout autour de la vitre. Le conduit tubulaire coulisse dans ce guide pour se déposer dans l'espace existant entre le joint et la carrosserie.

Cette technique se montre cependant insatisfaisante, car elle présente de multiples inconvénients.

Ce conduit tubulaire fabriqué pour des liaisons fluidiques n'est disponible dans le commerce qu'en certaines dimensions, par exemple cinq mètres. De plus, son diamètre se montre inadapté aux différents types et largeurs de joints existants.

Ainsi, lorsqu'on l'utilise pour une petite vitre, la longueur restante doit être ramenée, enroulée, protégée et fixée au centre de la vitre pendant le passage en peinture, ce qui impose des manipulations supplémentaires.

En outre, il est nécessaire de disposer d'un exemplaire de conduit pour chaque pourtour de vitre.

Pendant toute la durée de la phase de peinture et de séchage, il reste indisponible pour un second carrossier.

Au niveau de l'utilisation même, ces conduits tubulaires ne peuvent apporter de solution complète à toutes les difficultés de pose et de maintien à l'état soulevé de la lèvre du joint. Il est particulièrement difficile de positionner le conduit de manière à soulever régulièrement la lèvre du joint. En effet, le conduit s'écrase légèrement puis glisse sous le joint et se cale de façon désordonnée en raison notamment du jeu et de l'état variable de surface de l'intervalle existant entre le pare-brise et la carrosserie. Il en résulte ensuite une irrégularité de la bordure de la couche de peinture.

Egalement, le conduit tend à glisser en fond de gorge entre le joint et la carrosserie, ce qui entraîne un soulèvement encore plus irrégulier ou insuffisant de la lèvre du joint.

D'autre part, le conduit présente une tendance prononcée à s'aplatir ou à s'écraser sous une contrainte mécanique, en raison de sa forme tubulaire et d'une certaine élasticité de la matière dont il est constitué.

De plus, lorsqu'on enlève ce conduit après passage en peinture, celui-ci reste souvent collé par la peinture. Il se forme alors par la force d'arrachement des micro-arêtes qui, même situées sous le joint, peuvent à la longue entraîner un début d'écaillement de la nouvelle couche de peinture.

En raison du caractère onéreux et peu pratique de ce conduit, les professionnels utilisent souvent un simple câble électrique avec son isolation, qui se trouve facilement dans le commerce selon différents diamètres convenant à plusieurs types de joints. Mais ce câble se place également de manière aléatoire sous le joint, entraînant un soulèvement variable irrégulier de celui-ci. De plus, son introduction sous le joint s'avère peu commode. Enfin, le carrossier doit avoir continuellement en réserve un grand nombre de câbles différents.

On connaît par ailleurs par le brevet européen EP n° 0424114 SELECT TRADERS un outil à main pour insérer sous un joint à lèvre un matériau en bande après avoir soulevé le joint.

L'outil présente une poignée et un applicateur transversal plat en forme de règle dont une extrémité comporte un passage sous la forme d'un conduit oblique selon un axe incliné et une partie de guidage sous la forme d'une lame distincte et éloignée du conduit oblique de sortie.

Le joint est soulevé par la lame et le matériau est déposé sous le joint en se présentant à la sortie de l'outil selon l'inclinaison de l'axe du conduit oblique.

La précision de la mise en place n'est pas satisfaisante. L'absence de guidage latéral du cordon et sa sortie insuffisamment inclinée par rapport à la ligne de fond du joint ne permettent pas de placer le joint toujous au bon endroit. La forme plate et transversale de l'applicateur rend le mouvement de pose malaisé.

Or, la place du cordon constitue une condition importante de réussite du travail de peinture sous le joint.

On connaît également l'utilisation de cordons semi-rigides à glisser entre la lèvre d'un joint périmétrique de recouvrement des bords d'une vitre ou d'un pare-brise et la carrosserie d'un véhicule en vue de peindre une partie de l'espace recouvert par le joint.

L'illustration en est donnée par le brevet suédois SE n° 440982 FUNCTEK qui se rapporte à un outil utilisé pour soulever le joint et y glisser un cordon semi-rigide afin de peindre la carrosserie sous la lèvre de ce joint.

Cet outil en forme de tuyau semi-cylindrique est légèrement courbe et possède une poignée de maintien tubulaire.

L'outil présente à l'une de ses extrémités un orifice de sortie pour le cordon. On soulève le joint avec cette extrémité de l'outil, qui peut présenter une aile de guidage, et on dépose le cordon sous et le long du joint.

La conformation en conduit cylindrique de l'extrémité, éventuellement pourvue d'une aile, ne favorise pas le soulèvement du joint et son déplacement sous le joint. En effet, le diamètre important du cordon ne rend pas son introduction aisée. De plus, le cordon est du type raide, ce qui engendre de nombreux inconvénients et imprécisions de mise en place : irrégularités, déformations, glissement etc...

Or, l'espace libre entre le joint et la carrosserie doit être le plus grand possible pour bien réussir les travaux de peinture ainsi que son séchage.

Le but de l'invention est de remédier à ces inconvénients en remplaçant le conduit ou le câble électrique utilisés jusqu'à présent par un cordon de mousse souple expansible, de prix modique donc jetable, qui sera livré en grande longueur ou acheté au mètre, pour permettre l'adaptation exacte de sa longueur à celle du joint.

Le cordon sera comprimé avant son introduction sous le joint où il pourra s'expanser et procurer une plus grande zone d'ouverture entre le joint et la carrosserie pour faciliter l'entrée de la peinture projetée et le séchage ainsi que son enlèvement sans dommage pour la peinture.

Le cordon se dépose régulièrement sous la lèvre du joint. Il reste sans glisser à l'endroit où il est placé, la mousse compensant les jeux entre le joint et la carrosserie. Selon que l'on étire plus ou moins le cordon de mousse lors de la pose, la mousse étant également plus ou moins comprimée selon la force de rappel du joint contre la carrosserie, on a la possibilité de soulever la lèvre de ce joint de la façon désirée.

On réalise la mise en place finale de la mousse à l'aide du doigt. L'invention permet en outre de replier, à l'extrémité de la lèvre, le ruban adhésif protégeant le joint de la peinture et formant la jonction avec le bord du matériau plan protégeant la vitre. On évite ainsi que ce ruban adhésif ne se rétracte lors du passage en étuve.

Le cordon de mousse restant en place à l'endroit où il est déposé et immobilisé, il devient inutile de le pousser en fond de gorge pour le bloquer en position comme dans les solutions antérieures. On peut ainsi le mettre où l'on veut, c'est-à-dire à l'endroit optimal.

La pose du cordon de mousse ainsi que sa dépose sont particulièrement faciles et rapides.

En outre, on a la possibilité de choisir une mousse ayant pour propriété d'absorber la peinture. Ainsi, au lieu d'une rupture brutale de la couche de peinture, avec une arête vive cause d'écaillement ultérieur, on obtiendra une réduction progressive et régulière de l'épaisseur de la couche de peinture sous le joint.

Le procédé selon l'invention s'avère particulièrement utile et efficace pour les joints plus étroits encadrant les vitres et pare-brises solidarisés par collage, qui existent en grand nombre maintenant, et pour lesquels les câbles ou conduits souples classiques sont particulièrement difficiles à mettre en place.

En effet, le joint, dans le cas des vitres collées, est un joint d'étanchéité et d'esthétique en général constitué par une baguette semi-rigide, introduite à force dans l'intervalle existant entre la vitre et le bord de la carrosserie. Cette baguette est fragile et parfois solidarisée à la carrosserie par les excès de la colle utilisée pour coller le pare-brise.

Il s'avère préférable de ne pas la retirer lors d'un passage en peinture.

Egalement, en raison de la forme bombée de la lèvre recouvrant la carrosserie, le conduit tubulaire souple classique ou le câble glisse et vient s'immobiliser en fond de gorge sans soulever suffisamment le joint.

L'usage du cordon de mousse souple selon l'invention est donc, dans ce cas également, particulièrement efficace et avantageux.

Un autre but de l'invention est de fournir un instrument distributeur pour la pose du cordon, qui facilite encore sa mise en place.

A cet effet, l'instrument suivant l'invention est muni d'un bec de distribution permettant de soulever la lèvre recouvrante du joint, de délivrer et d'insérer régulièrement le cordon sous cette lèvre de façon à la maintenir provisoirement soulevée. Il comprend une admission ou une réserve de cordon délivrée à partir d'une cartouche, d'un contenant ou d'un rouleau dévidoir. Il est également muni d'un moyen de préhension qui pourra être un élément rapporté ou bien le contenant lui-même.

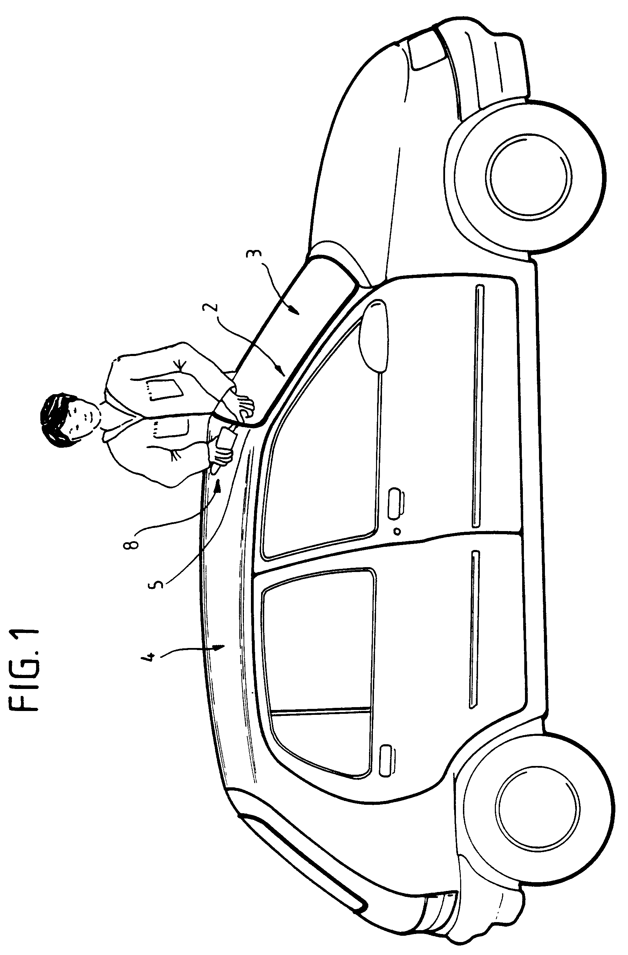

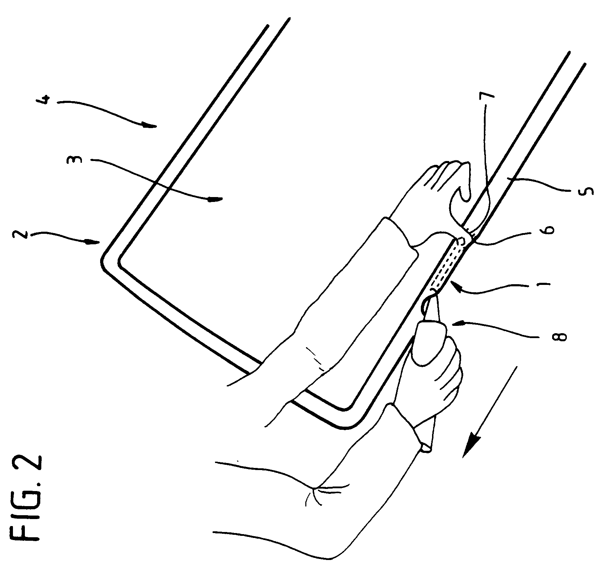

Les caractéristiques techniques et d'autres avantages de l'invention sont consignés dans la description qui suit, effectuée à titre d'exemple non limitatif sur un mode d'exécution en référence aux dessins accompagnants dans lesquels :
. les figures 1 et 2 sont des vues générales en perspective illustrant le procédé de mise en place du cordon pour soulever un joint de pare-brise de voiture, à l'aide de l'instrument distributeur selon l'invention ;
. les figures 3 à 6 sont des vues illustrant la mise en place du cordon dont:
   - la figure 3 est une vue en perspective du joint sous une longueur de lèvre duquel le cordon est déjà placé ;
   - les figures 4, 5 et 6 sont des vues mixtes en coupe et en perspective au niveau des lignes de coupe respectivement IV-IV, V-V, et VI-VI de la figure 3 ;
. les figures 7, 8 et 9 sont des vues en perspective du joint, cordon en place, respectivement avant, pendant et après la projection de peinture ;
. la figure 10 est une vue en coupe transversale d'un joint périmétrique de type classique après mise en place du cordon ;
. la figure 11 est une vue en coupe analogue dans le cas d'un joint périmétrique pour une vitre solidarisée par collage ;
. les figures 12 et 13 sont des vues de profil et en coupe de l'instrument distributeur selon sa variante de base ;
. les figures 14 et 15 sont des vues mixtes de profil et en coupe de l'instrument selon une variante avec réserve ;
. les figures 16 et 17 sont des vues de profil de l'instrument selon des variantes de réalisation avec une réserve en rouleau ;
. la figure 18 est une vue en coupe d'un distributeur à main dans le corps duquel est introduite l'extrémité d'un cordon de mousse ;
. les figures 19 et 20 sont des vues de deux différentes extrémités de départ du cordon de mousse à insérer dans le bec du distributeur.

L'invention procède de l'idée générale inventive selon laquelle on insère sous le joint périmétrique d'un pare-prise, d'une vitre ou autre paroi obturant une ouverture, entre ce joint et la surface adjacente à peindre ou à traiter, un cordon de mousse souple, pour soulever efficacement et régulièrement la lèvre ou une des lèvres sur une partie ou la totalité de sa longueur, et pour la garder maintenue à l'état soulevé résultant de la présence du cordon pendant une durée déterminée correspondant aux opérations de peinture ou de traitement de la carrosserie et de séchage ultérieur.

On utilise un cordon 1 de matière souple, par exemple une mousse du type polyéthylène, d'une section adaptée en forme et en dimensions à celle d'un joint 2 périmétrique entourant un pare-brise 3 ou une vitre à protéger au cours des opérations de peinture ou de traitement d'une carrosserie 4 d'un véhicule, ou d'une partie de celle-ci située à proximité du joint. Une lèvre 5 de ce joint 2 recouvre la carrosserie sur le pourtour du pare-brise ou de la vitre 3.

Par matière souple il faut entendre toute matière susceptible après avoir été étirée, comprimée ou pressée, de revenir ensuite à son état initial ou à un état suffisamment proche permettant son utilisation selon l'invention ou qui fait l'objet d'une expansion après la pose.

Un exemple de matière souple utilisable pour réaliser le cordon est décrit dans le brevet américain n° 4,996,092.

Par cordon, il faut comprendre toute forme physique continue allongée analogue à une corde ou à un fil, quelles que soient les caractéristiques particulières de forme de sa section.

De préférence mais non obligatoirement, le cordon sera sans arête vive, présentant une section par exemple de forme circulaire ou ovale

Une extrémité de départ 6 du cordon 1 est introduite en un point quelconque 7 sous le joint 2, dont on soulève localement la lèvre, puis progressivement on insère en continu le cordon sous cette lèvre sur tout le pourtour jusqu'à revenir au point de départ.

Bien entendu, on peut également, le cas échéant, ne soulever le joint que sur une partie de sa longueur.

Cette extrémité de départ 6 peut être formée de façon particulière dans le cordon. Par exemple, elle comportera un embout éventuellement rigide ou une conformation adaptée facilitant son introduction et son immobilisation sous la lèvre du joint, manuellement ou à l'aide d'un instrument adapté.

Après mise en place, on coupe le cordon à la longueur adéquate et on procède aux opérations de peinture ou de traitement.

Selon une variante représentant une mise en oeuvre manuelle sommaire du procédé, on peut soulever initialement le joint, par exemple à l'aide d'un tournevis ou tout autre outil à extrémité fine. On introduit une extrémité du cordon que l'on maintient avec une main à proximité du fond de gorge sous la lèvre du joint, tandis que de l'autre, on insère petit à petit le cordon sous le joint le long du pourtour, en le tendant de manière à obtenir le soulèvement voulu et en l'enfonçant avec le doigt.

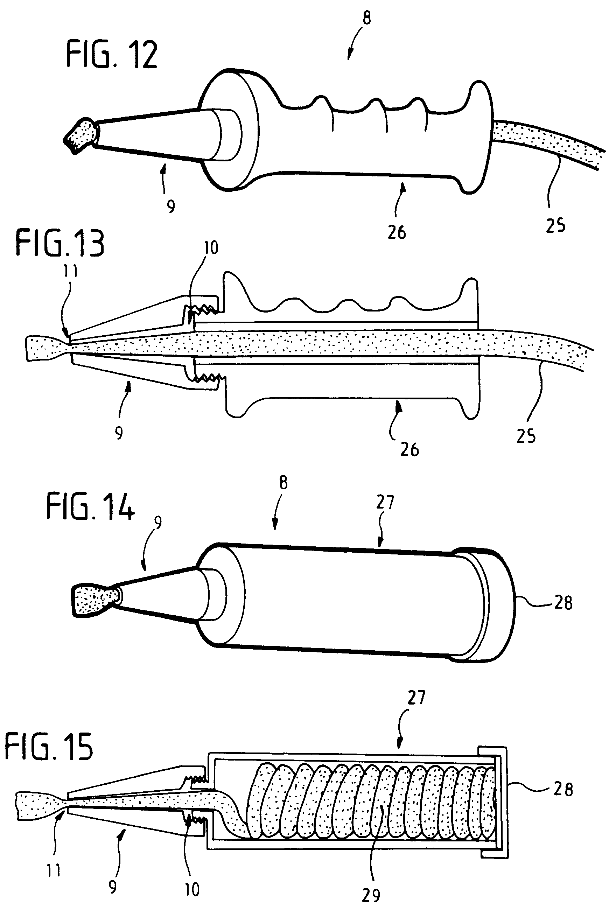

Cependant, la mise en oeuvre systématique rapide et efficace du procédé selon l'invention s'effectuera de préférence à l'aide d'un instrument distributeur, par exemple celui référencé 8 et dont plusieurs variantes seront décrites plus loin en référence aux figures 12 à 18.

Cet instrument distributeur 8 présente les caractéristiques et les fonctions générales suivantes.

Il est constitué tout d'abord d'un bec 9 de distribution utilisé pour écarter la lèvre 5 du joint et conduire le cordon 1 sous cette lèvre, bec à travers lequel passe le cordon et duquel il sort après une compression par la forme intérieure convergente du bec 9 vers la sortie.

Il comprend ensuite une admission ou une réserve de cordon, celle-ci étant éventuellement renfermée dans un contenant dans lequel peut être lovée une longueur donnée de cordon, par exemple dix ou quinze mètres, ou dans un magasin fixe, mobile, amovible ou rechargeable, par exemple sous la forme d'un support du type dévidoir, autour duquel le cordon est enroulé.

Egalement, il comporte un moyen de préhension par lequel il peut être saisi par l'utilisateur pour la manoeuvre de l'instrument, ce moyen de préhension pouvant être le contenant ou le magasin, ou un élément ou un organe rapporté, par exemple une poignée.

Il est prévu en outre à titre accessoire ou facultatif des moyens d'avance ou de poussée du cordon réserve et des moyens pour le conduire vers et jusqu'à l'extrémité d'entrée du bec.

Avantageusement, on préférera un bec de distribution de forme générale intérieure et extérieure convergente de son entrée 10 vers son extrémité libre de sortie 11, par exemple conique, de manière à pouvoir l'introduire facilement sous la lèvre 5 du joint, soulever celle-ci et faire glisser aisément l'extrémité du bec délivrant le cordon entre ladite lèvre et la tôle de carrosserie.

Ce bec de distribution peut être réalisé sous la forme d'un embout creux ou d'une douille de forme cylindrique, conique ou cylindro-conique ou toute autre forme convergente.

Il sera réalisé dans une matière non susceptible de rayer la carrosserie, par exemple une matière plastique rigide. Le cas échéant, la rigidité du bec sera obtenue et/ou renforcée par des nervures ou cannelures longitudinales.

Si l'on choisit un bec à embout convergent tel que la section de sortie du canal intérieur soit de diamètre inférieur à celui de la section du cordon de mousse non comprimée, comme représenté sur les figures, on obtiendra l'avantage supplémentaire de comprimer la mousse juste avant sa mise en place sous la lèvre du joint.

En raison de ses propriétés élastiques, la mousse va s'expanser sous le joint juste après sa sortie du bec distributeur, l'effet étant augmenté par la tension imprimée au cordon lors de sa mise en place.

Bien entendu, d'autres formes de réalisation de l'embout constituant le bec 9 sont possibles.

En outre, le bec peut être fixé sur le corps du distributeur 8 de manière amovible, par exemple par vissage, de telle sorte que l'utilisateur puisse disposer d'un lot de becs de distribution interchangeables, différents les uns des autres car utilisables en fonction du diamètre du cordon et de la forme du joint.

Pour mettre en place le cordon sous la lèvre recouvrante d'un joint à l'aide de l'instrument distributeur 8 selon l'invention, on procède simplement de la manière suivante.

En un point quelconque du joint garnissant le pourtour du pare-brise ou de la vitre, on introduit, en soulevant légèrement la lèvre, l'extrémité du bec 9 de distribution, duquel dépasse une courte longueur de cordon. On l'insère ensuite sous le joint entre la tôle de carrosserie et la lèvre recouvrante.

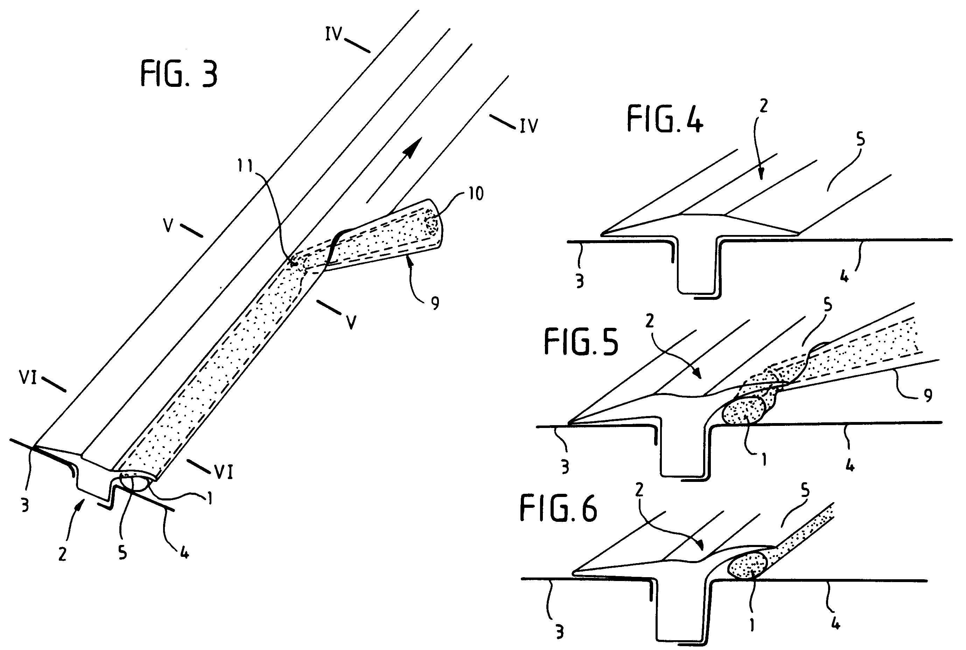

On retient par la simple pression d'un doigt l'extrémité du cordon, et l'on fait glisser simplement le long du joint le bec 9 de l'instrument disposé de préférence en oblique par rapport à la direction générale locale du joint (figures 3 à 6). Le cordon se dévide en coulissant à travers le bec et se dépose en continu sans glisser en fond de gorge sous la lèvre recouvrante du joint après que l'extrémité du bec l'ait soulevée.

En faisant varier la tension du cordon, on obtient une compression plus ou moins grande du cordon qui facilitera l'introduction.

Le cas échéant, on effectue un deuxième passage à la suite du premier.

Une fois la lèvre soulevée sur l'ensemble de son pourtour, on coupe simplement le cordon.

Les joints de l'ensemble des vitres d'un véhicule peuvent ainsi rapidement être soulevés.

L'instrument distributeur 8 de mise en place redevient immédiatement disponible pour la préparation d'un second véhicule ou pour un autre poste de travail.

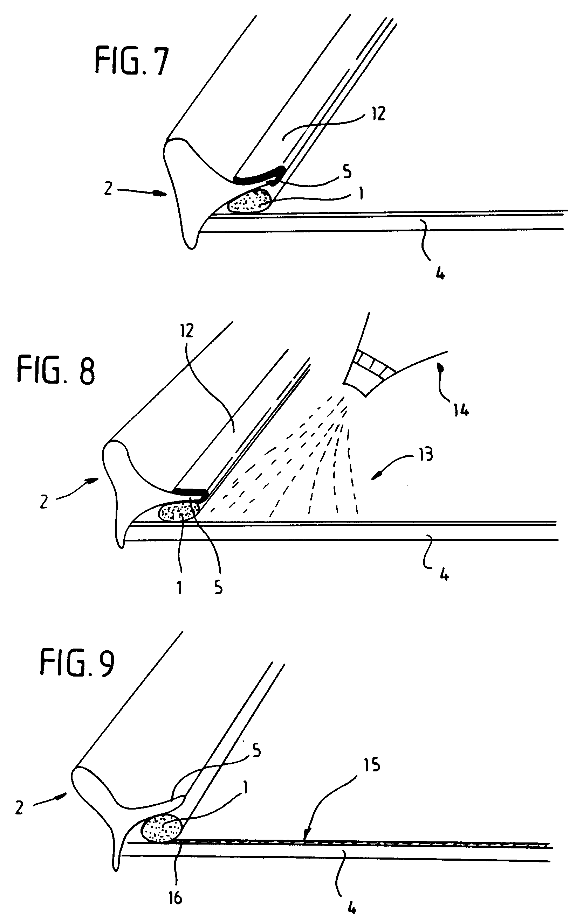

Après mise en place du cordon sous le joint d'une vitre, on protège le joint des projections de peinture par un ruban adhésif 12 (qui peut également maintenir l'écran de protection de la vitre) en le repliant autour du bord d'extrémité de la lèvre recouvrante du joint (voir figures 7 à 9).

On procède alors au traitement ou à la peinture de la carrosserie par la projection de peinture 13, par exemple à l'aide d'un pistolet dont seule l'extrémité 14 est représentée.

Le cordon de mousse permet de réaliser une qualité excellente de finition de la couche de peinture 15, notamment au niveau de la bordure d'extrémité 16 sous le joint.

Après séchage, on enlève le cordon en tirant sur une extrémité de celui-ci de façon à le dégager du joint, ce dernier reprenant immédiatement sa position initiale. La lèvre revient par rappel élastique recouvrir la surface de carrosserie nouvellement peinte sous le joint.

La jonction est nette, le joint n'étant pas souillé de peinture. La bordure d'extrémité de la couche de peinture est progressive, évitant tout risque d'écaillement ultérieur.

Le procédé reste efficace, même pour des joints de très faible largeur.

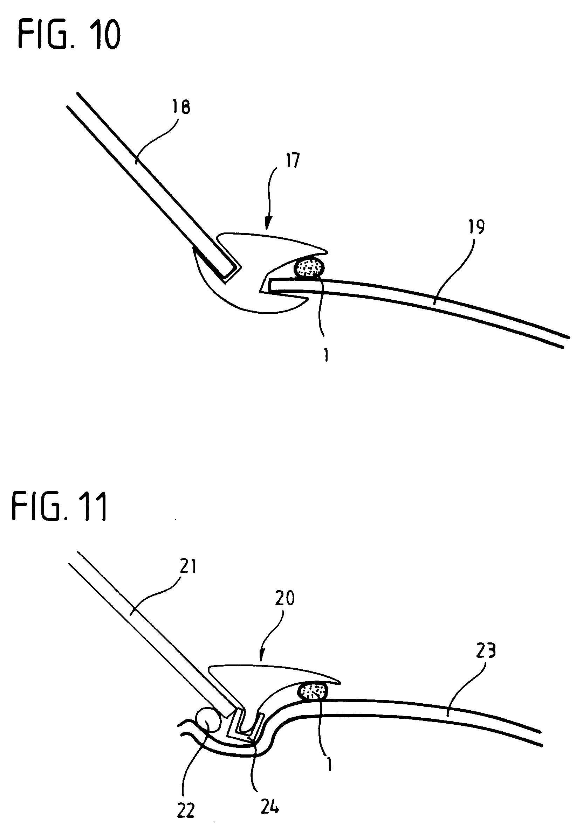

Le procédé et l'instrument distributeur et de mise en place sont particulièrement adaptés à différents types de joints existants, dont deux exemples sont représentés de manière non limitative sur les figures 10 et 11, dans le cas des véhicules.

Le joint peut être, par exemple, un joint 17 de maintien d'une vitre ou d'un pare-brise 18 classique sur une carrosserie 19, comme représenté sur la figure 10 (joint soulevé), ou un joint 20 pour une vitre ou un pare-brise 21 solidarisé par un cordon 22 de colle sur une carrosserie 23, comme représenté sur la figure 11. Dans cet exemple, le joint est inséré dans un élément intermédiaire de maintien 24 du type baguette.

Différents exemples d'instruments adaptés à la mise en place du cordon souple de mousse sont représentés sur les figures 12 à 18.

Selon une réalisation simple de l'instrument 8 présentée comme variante de base sur les figures 12 et 13, la réserve de cordon est constituée par une longueur libre de cordon 25 que l'utilisateur coupera lui-même à la dimension voulue, et dont il introduira une extrémité dans l'instrument à travers le bec distributeur 9.

Selon cette variante, le cordon sera conditionné par exemple dans une boîte ou un carton contenant une longueur importante, par exemple cinquante mètres de cordon sous la forme de rouleau à dévider au fur et à mesure de l'utilisation. Le cordon sera coupé soit à la main, soit à l'aide d'un bord tranchant dont l'emballage pourra être muni ou par un instrument tranchant, lame, couteau, ciseaux.

Eventuellement, le cordon sera admis directement en continu dans l'instrument distributeur.

Le moyen de préhension se présente selon cette variante comme une poignée 26 ergonomique, à l'extrémité de laquelle est fixé le bec de distribution 9. La poignée est creuse, de manière à pouvoir être traversée par le cordon. La disposition de la poignée dans l'axe du bec est utile au maniement de l'instrument au cours de la mise en place. Le cas échéant, la poignée pourra cependant être disposée transversalement.

Dans le cas de la variante représentée sur les figures 14 et 15, la réserve de cordon est renfermée dans un contenant 27 sous la forme d'un cylindre souple ou rigide en carton, plastique, métal ou autre, muni par exemple d'un fond amovible 28, dans lequel une longueur 29 donnée de cordon est enfermée, par exemple vingt, trente ou quarante mètres. Le cordon peut être introduit "en vrac", mais il le sera de préférence de manière ordonnée, par exemple lové, c'est à dire enroulé sur lui-même, la mousse étant comprimée ou non, sous la forme d'une pelote ou d'une bobine d'axe géométrique confondu avec celui du contenant, de laquelle il sera déroulé au fur et à mesure de l'utilisation.

Bien entendu, d'autres modes d'exécution du contenant utilisé pour la réserve sont possibles, en fonction de la forme et des dimensions que l'on désire donner au corps du distributeur, et de la quantité de cordon de réserve nécessaire.

Le contenant sera soit rechargeable, par introduction d'une nouvelle longueur de cordon ou d'une nouvelle pelote ou bobine, soit remplaçable. La réserve pourra être constituée par un conditionnement particulier du cordon, par exemple une enveloppe souple ou thermorétractable ou une cartouche facilement remplaçable.

Le contenant dans lequel est logée la réserve de cordon pourra être saisi directement par la main de l'utilisateur, code dans l'exemple de réalisation représenté sur les figures 14 et 15, dont l'utilisation est illustrée par les figures 1 et 2. Le moyen de préhension est alors le contenant lui-même. Mais on pourra également conformer une poignée ergonomiquement adaptée latérale ou longitudinale, fixe ou amovible.

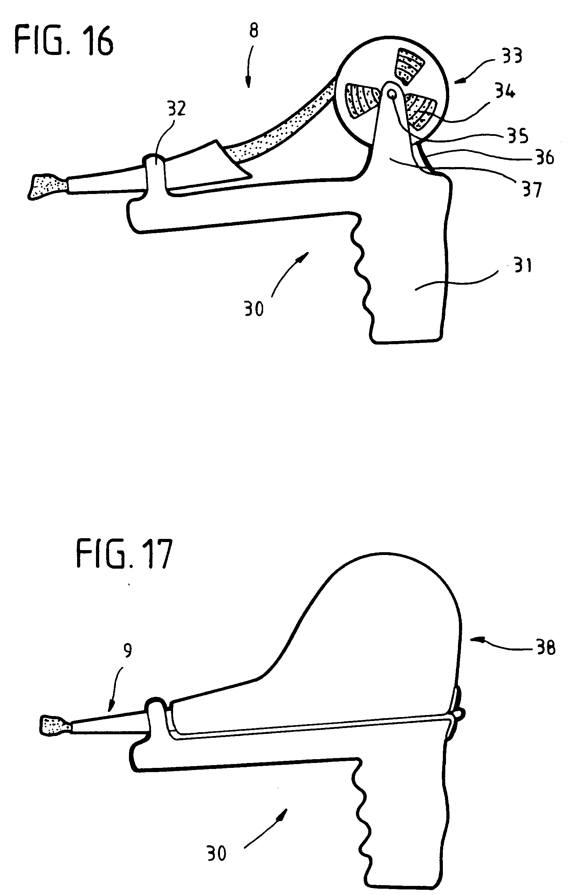

Les figures 16 et 17 représentent d'autres variantes de réalisation de l'instrument distributeur 8 selon l'invention. Le corps du distributeur affecte la forme générale d'un pistolet 30 à crosse 31 servant d'organe de préhension.

Le bec 9 de distribution est monté de manière amovible sur l'extrémité avant, par exemple dans une bague de maintien 32 conformée dans le corps du distributeur.

La réserve de cordon provient ici d'un rouleau ou d'une bobine interchangeable formant dévidoir 33 sur lequel est enroulée une longueur 34 de cordon, et qui est placé transversalement au corps du distributeur de manière à dérouler directement et librement le cordon vers, puis à travers, le bec.

Par exemple, le rouleau ou la bobine sera enroulé directement sur une tige transversale formant un axe 35 pouvant être monté par encliquetage ou enclipsage sur deux branches latérales 36,37 verticales du corps du distributeur. Eventuellement, le cordon pourra être directement enroulé sur cet axe.

D'autre part, comme représenté sur la figure 17, l'instrument pourra éventuellement être muni d'un carter de protection 38.

L'instrument distributeur, selon ces variantes, mais également selon d'autres variantes, pourra en outre comporter un mécanisme d' avance liée à une commande par exemple à gâchette ou autre, actionnée par le doigt de l'utilisateur pour réaliser la poussée ou la traction du cordon dans ou hors du bec 9.

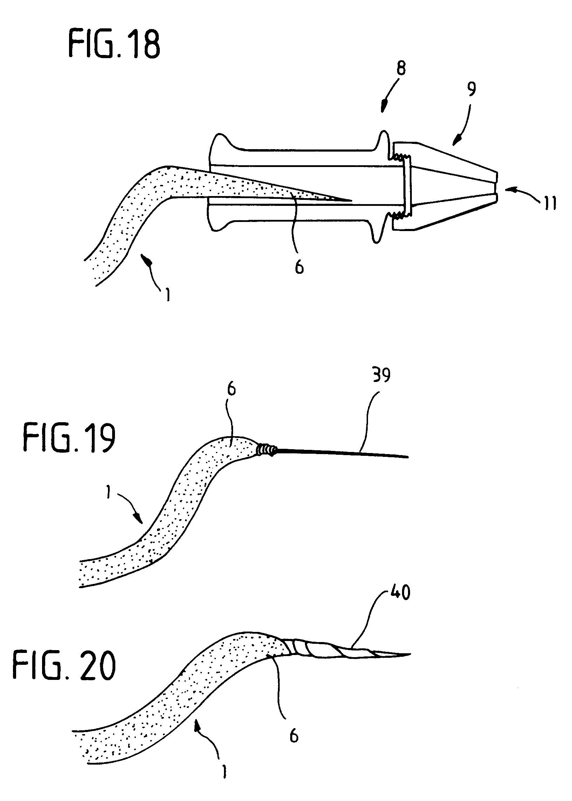

Le problème posé par l'introduction initiale du cordon à travers le bec de l'instrument pourra être résolu de la manière suivante (figures 18 à 20).

Dans le cas d'une recharge sous la forme d'une cartouche, bobine ou rouleau de réserve, l'extrémité 6 de départ présentera une section progressivement réduite de manière à traverser la sortie du bec distributeur sans compression. Eventuellement, cette extrémité pourra être munie d'un embout rapporté 39, par exemple un fil ou une tige mince souple ou rigide enserrant et comprimant l'extrémité de départ du cordon.

Dans le cas d'une réserve libre de cordon ou dans l'hypothèse d'une rupture du cordon, l'utilisateur réalisera facilement une extrémité affinée, soit en coupant en biseau l'extrémité de départ du cordon, par exemple à l'aide de lames dont serait muni l'emballage de conditionnement de vente, soit en conformant ou en traitant l'extrémité, par exemple en roulant sur elle-même une courte longueur de ruban adhésif 40, soit par tout autre moyen permettant d'obtenir une extrémité pointue traversant le bec distributeur.

## Revendications

1. Procédé de pose d'un cordon (1) de matière souple sous un joint (2) linéaire ou périmétrique à lèvre (5) recouvrant ou maintenant une paroi en vue du maintien de la lèvre à l'état soulevé, caractérisé en ce que l'on introduit sous la lèvre (5) du joint (2) sur au moins une partie de sa longueur un cordon (1) plein de matière souple compressible susceptible d'expansion et en ce que le cordon (1) est comprimé localement et en continu juste avant sa pose sous la lèvre (5) du joint (2).

2. Procédé selon la revendication 1, caractérisé en ce que l'on soulève localement la lèvre (5) à l'aide du bec (9) d'un instrument distributeur (8), on introduit une extrémité (6) du cordon (1) sous la lèvre (5), on immobilise cette extrémité (6), on déplace l'extrémité du distributeur par laquelle sort le cordon (1) sous la lèvre (5) du joint (2), on extrait en continu le cordon (1) du distributeur (8) à travers le bec (9) de distribution au fur et à mesure que le distributeur (8) se déplace sous la lèvre (5) du joint (2).

3. Procédé selon l'une des revendications précédentes, caractérisé en ce que la matière du cordon (1) souple est une mousse.

4. Procédé selon l'une des revendications précédentes, caractérisé en ce que la mousse formant le matière du cordon (1) est une mousse absorbante.

5. Application du procédé selon l'une des revendications 1 à 4 au soulèvement et au maintien à l'état soulevé sur au moins une partie de sa longueur d'une lèvre (5) d'un joint (2) linéaire ou périmétrique, pendant la projection et le séchage d'une peinture ou l'application d'un revêtement ou d'un traitement de surface sur la zone voisine du joint (2) et recouverte par la lèvre de celui-ci.

6. Distributeur à main avec cordon (1) pour la pose dudit cordon (1) de matière souple sous l'unique ou l'une des lèvres recouvrantes (5) d'un joint (2) linéaire ou périmétrique interposé entre une paroi et son support conformément à l'une quelconque des revendications de 1 à 4, caractérisé en ce qu'il se compose d'un bec (9) distributeur ou dispensateur à travers lequel est délivré le cordon (1), d'une réserve de cordon à partir de laquelle le cordon (1) se dirige vers le bec (9), d'un moyen de préhension permettant d'orienter le bec (9) en vue de son travail de pose du cordon (1) sous la lèvre (5) et de maintien local à l'état relevé de la lèvre (5) du joint (2) pendant la pose du cordon (1) sous la lèvre (5) et en ce que la section de l'ouverture intérieure du bec (9) se réduit de son entrée (10) vers sa sortie (11) de façon à comprimer en continu le cordon (1) avant sa pose.

7. Distributeur selon la revendication 6, caractérisé en ce que la réserve de cordon est enfermée dans un contenant.

8. Distributeur selon la revendication 6, caractérisé en ce que la réserve de cordon est montée sur une bobine se déroulant au fur et à mesure des besoins.

9. Distributeur selon la revendication 6, caractérisé en ce que la réserve de cordon est montée sur un rouleau mobile en rotation autour d'un axe (35) fixé à l'instrument distributeur (8).

10. Distributeur selon la revendication 6, caractérisé en ce que le moyen de préhension est la partie du corps de l'instrument distributeur (8) formant contenant pour la réserve de cordon.

## Claims

1. Method for laying a strip (1) of flexible material beneath a linear or peripheral seal (2) with a lip (5) covering or holding a wall in order to hold the lip in a raised position, characterized in that beneath the lip (5) of the seal (2) there is introduced, over at least a part of its length, a solid strip (1) of compressible flexible material capable of expansion, and in that the strip (1) is compressed locally and continuously just before being laid beneath the lip (5) of the seal (2).

2. Method according to Claim 1, characterized in that the lip (5) is raised locally by means of the tip (9) of a dispensing instrument (8), one end (6) of the strip (1) is introduced beneath the lip (5), this end (6) is fixed, the end of the dispenser through which the strip (1) emerges is moved along beneath the lip (5) of the seal (2), and the strip (1) is continuously withdrawn from the dispenser (8) through the dispensing tip (9) as the dispenser (8) moves along beneath the lip (5) of the seal (2).

3. Method according to one of the preceding claims, characterized in that the material of the flexible strip (1) is a foam.

4. Method according to one of the preceding claims, characterized in that the foam forming the material of the strip (1) is an absorbent foam.

5. Application of the method according to one of Claims 1 to 4 to the raising and holding in the raised position, over at least a part of its length, of a lip (5) of a linear or peripheral seal (2), during the spraying and drying of paint or the application of a coating or a surface treatment on the area adjacent to the seal (2) and covered by the lip of the seal.

6. Hand-held dispenser with a strip (1) for laying the said strip (1) of flexible material beneath the only lip or one of the lips (5) covering a linear or peripheral seal (2) interposed between a wall and its support according to any one of Claims 1 to 4, characterized in that it consists of a distributing or dispensing tip (9) through which the strip (1) is delivered, a supply of strip from which the strip (1) moves towards the tip (9), a gripping means allowing the tip (9) to be directed for the purpose of its job of laying the strip (1) beneath the lip (5) and of holding the lip (5) of the seal (2) in the raised position locally during the laying of the strip (1) beneath the lip (5), and in that the section of the inner opening of the tip (9) is reduced from its inlet (10) towards its outlet (11) so as to compress the strip (1) continuously before it is laid in place.

7. Dispenser according to Claim 6, characterised in that the supply of strip is enclosed in a container.

8. Dispenser according to Claim 6, characterized in that the supply of strip is mounted on a reel unwinding as required.

9. Dispenser according to Claim 6, characterized in that the supply of strip is mounted on a roller movable in rotation about a pin (35) fixed to the dispensing instrument (8).

10. Dispenser according to Claim 6, characterized in that the gripping means is the part of the body of the dispensing instrument (8) forming a container for the supply of strip.

## Patentansprüche

1. Verfahren zum Ablegen eines Strangs (1) aus elastischem Material unter eine eine Wand abdeckende oder haltende, lineare oder umlaufende Dichtung (2) mit einer Lippe (5) zum Zwecke des Aufstellens der Lippe in einer angehobenen Position, dadurch gekennzeichnet, daß unter die Lippe (5) der Dichtung (2) zumindest auf einem Teilabschnitt ihrer Länge ein geschlossener Strang (1) aus weichem, kompressiblem und expandierbarem Material eingebracht wird, und daß der Strang (1) lokal und kontinuierlich kurz vor seinem Einbringen unter die Lippe (5) der Dichtung (2) komprimiert wird.

2. Verfahren nach Anspruch 1, dadurch gekennzeichnet, daß die Lippe (5) mit Hilfe des Mundstücks (9) eines Verteilgerätes (8) angehoben, ein Ende (6) des Stranges (1) unter die Lippe (5) eingebracht und an diesem Ende (6) festgelegt, das Ende des Verteilgerätes, aus dem der Strang (1) austritt, unter der Lippe (5) der Dichtung (2) verlagert und der Strang (1) aus dem Verteilgerät (8) über das Mundstück (9) in dem Maße herausgezogen wird, wie das Verteilgerät (8) unter der Lippe (5) der Dichtung (2) verlagert wird.

3. Verfahren nach einem der vorangehenden Ansprüche, dadurch gekennzeichnet, daß das Material des elastischen Strangs (1) ein Schaum ist.

4. Verfahren nach einem der vorangehenden Ansprüche, dadurch gekennzeichnet, daß der das Material des Strangs (1) bildende Schaum ein saugfähiger Schaum ist.

5. Anwendung des Verfahrens nach einem der Ansprüche 1 bis 4 zum Aufstellen und Halten im angehobenen Zustand einer Lippe (5) einer linearen oder umlaufenden Dichtung (2) auf zumindest einem Teilbereich ihrer Länge während des Spritzens und Trocknens einer Farbe oder des Beschichtens oder während einer Bearbeitung der Oberfläche in demjenigen Bereich, der der Dichtung (2) benachbart ist und der durch deren Lippe abgedeckt ist.

6. Handbetätigtes Verteilgerät mit einem Strang (1) zum Ablegen des Strangs (1) aus nachgiebigem Material unter die oder eine abdeckende Lippe (5) einer linearen oder umlaufenden Dichtung (2) zwischen einer Wand und deren Träger nach einem der Ansprüche 1 bis 4, dadurch gekennzeichnet, daß das Verteilgerät ein Verteiler- oder Spendermundstück (9), über das der Strang (1) abgegeben wird, einen Strangvorrat, von dem sich der Strang (1) in Richtung zum Mundstück (9) bewegt, und Greifmittel aufweist zum Ausrichten des Mundstücks (9) im Hinblick auf dessen Funktion zum Einbringen des Strangs (1) unter die Lippe (5) und zum lokalen Aufstellen der Lippe (5) der Dichtung (2) in eine angehobene Position beim Ablegen des Strangs (1) unter der Lippe (5), und daß sich der innere Öffnungsquerschnitt des Mundstücks (9) von seinem Einlaß (10) zu seinem Auslaß (11) verringert, um den Strang (1) vor dem Ablegen kontinuierlich zu komprimieren.

7. Verteiler nach Anspruch 6, dadurch gekennzeichnet, daß der Strangvorrat in einem Behälter eingeschlossen ist.

8. Verteiler nach Anspruch 6, dadurch gekennzeichnet, daß der Strangvorrat auf einer sich nach Bedarf abrollenden Spule aufgewickelt ist.

9. Verteiler nach Anspruch 6, dadurch gekennzeichnet, daß der Strangvorrat sich auf einer Spule befindet, die auf einer fest am Verteilgerät (8) angeordneten Achse (35) drehbeweglich ist.

10. Verteiler nach Anspruch 6, dadurch gekennzeichnet, daß die Greifmittel Bestandteil des Korpus des einen Behälter für den Strangvorrat bildenden Verteilgerätes (8) ist.
